# EUROPEAN PATENT SPECIFICATION

(11) **EP 3 127 877 B1**
(45) Date of publication and mention of the grant of the patent: **19.12.2018**
(21) Application number: 16179455.7
(22) Date of filing: 14.07.2016
(51) Int. Cl.: C03C 8/14, C03B 23/023, C03C 10/00, C03B 32/02, C03C 17/04

(54) **METHOD OF MANUFACTURING A BENT GLASS-CERAMIC SHEET**
VERFAHREN ZUR HERSTELLUNG VON GEBOGENEN GLASKERAMIKSCHEIBEN
PROCÉDÉ DE FABRICATION D'UNE FEUILLE DE VITRO-CÉRAMIQUE CINTRÉE

(30) Priority: 03.08.2015 JP 2015153370
(43) Date of publication of application: 08.02.2017
(73) Proprietor: NIPPON ELECTRIC GLASS CO., LTD, Otsu-shi, Shiga 520-8639 (JP)
(72) Inventor: TSUCHIYA, Takeshi, Otsu-shi Shiga, 528639 (JP); KANAZAWA, Toshiaki, Otsu-shi Shiga, 528639 (JP)
(74) Representative: Tetzner, Michael

(56) References cited:
- EP-A1- 2 806 215
- US-A1- 2002 148 255
- US-A1- 2011 154 857
- US-B1- 6 517 943

## Description

### Technical Field

The present invention relates to a method of manufacturing a bent sheet of a crystallized glass having a light-shielding layer formed thereon.

### Background Art

Hitherto, a low-expansion crystallized glass has been used as a window for a combustion device, a fireproof window, equipment for cooking with heat, or the like because of excellent heat resistance.

The window for a combustion device is fixed to a metallic frame of a combustion device body through a gasket, an adhesive, or the like. In this case, when the gasket or the adhesive is visually recognized from outside, a design property is impaired. Therefore, a light-shielding layer is formed on at least a part of a window glass so as to cover a portion of the gasket or the adhesive (see, for example, JP 2007 39294 A and JP 2010 96390 A). Further, in order to reduce the portion of the gasket or the adhesive, a flat glass sheet is heated, to thereby produce a glass bent sheet.

EP 2 806 215 A1 discloses a windowpane for a combustion apparatus in which a light-blocking layer containing an inorganic pigment powder and a glass powder is formed on a surface of a transparent crystallized glass plate.

### Summary of Invention

### Technical Problem

In the related art, a method of manufacturing a bent sheet of a crystallized glass having a light-shielding layer formed thereon includes a printing step of printing a paste including glass powder that contains an alkali metal oxide as a component and a pigment onto a flat sheet-shaped glass substrate formed of a glass before crystallization (crystallizable glass), a bending step of subjecting the glass substrate having the paste printed thereon to bending work by heating, and a crystallization step of crystallizing the crystallizable glass by heating. In the crystallization step, the paste is sintered to form a light-shielding layer by heating.

However, in the crystallization step of a LAS-based crystallized glass, a component of the surface of the crystallizable glass before crystallization and a component (e.g., an alkali metal oxide) of the glass powder may react with each other by heating to generate a crystal of β-spodumene. When this crystal is generated on the surface of a glass sheet, the glass powder does not flow easily, and hence a pigment is not dissolved easily in the glass powder. Then, there arises a problem in that the color of the light-shielding layer becomes different from an original color of the pigment expressed by dissolution of the pigment in the glass powder.

Asamethodof solving the above-mentionedproblem, there is given a method involving reducing the amounts of elements (e.g., an alkali metal oxide) that are liable to react with the crystallizable glass in the glass powder. In this method, however, the amount of a crystal having a negative expansion rate precipitated in the glass decreases, and it is difficult for the crystallized glass to keep a low thermal expansion coefficient. Further, in general, the glass powder having a reduced amount of the alkali metal oxide is not dissolved easily by heating, and hence it is difficult to manufacture a crystallized glass sheet with such glass powder. Thus, in the related-art manufacturing method, it is difficult to manufacture a crystallized glass sheet having a bent shape in which a formed light-shielding layer exhibits an original color of a pigment.

The present invention has been made in view of the above-mentioned circumstances, and it is a technical object of the present invention to provide a method of manufacturing a bent sheet of a crystallized glass in which a formed light-shielding layer exhibits an original color of a pigment.

### Solution to Problem

A method of manufacturing a glass bent sheet according to one embodiment of the present invention, which is devised to achieve the above-mentioned object, comprises: printing a paste including glass powder that contains an alkali metal oxide as a component and a pigment onto a flat sheet-shaped glass substrate formed of a LAS-based crystallizable glass; performing bending work to the glass substrate having the paste printed thereon by heating; and crystallizing the crystallizable glass by heating, the method further comprising, after the printing and before the performing bending work and the crystallizing, provisionally sintering the paste printed onto the glass substrate by heating at a temperature equal to or higher than a softening point of the glass powder plus 20°C and lower than a highest heating temperature in the crystallizing, wherein the heating temperature in the provisionally sintering is from 700°C to 760°C, wherein in the provisional sintering the glass powder flows easily.

The above-mentioned configuration comprises the provisional sintering step of heating the paste after the printing step and before the bending step and the crystallization step. In addition, in the provisional sintering step, the paste is heated at a temperature equal to or higher than the softening point of the glass powder plus 20°C. Thus, in the provisional sintering step, the glass powder is dissolved immediately. With this, in the provisional sintering step, the reaction of the alkali metal oxide of the glass powder or the crystallizable glass is suppressed, and hence the generation of a crystal of β-spodumene is suppressed. Therefore, in the provisional sintering step, the glass powder can flow easily, and the pigment is dissolved easily in the glass powder. As a result, the color of a light-shielding layer to be formed can exhibit an original color of the pigment. That is, in the method of manufacturing a glass bent sheet according to the embodiment of the present invention, a bent sheet of a crystallized glass, in which the formed light-shielding layer exhibits the original color of the pigment, can be manufactured.

Further, in the provisional sintering step, the paste is heated at a temperature lower than the highest heating temperature in the crystallization step. With this, in the provisional sintering step, the crystallization of the crystallizable glass of the glass substrate is suppressed. Thus, in the bending step after the provisional sintering step, the situation in which the glass substrate cannot be subjected to the bending work can be avoided.

In the configuration described above, the heating temperature in the provisionally sintering is from 700°C to 760°C.

According to this configuration, the color of the light-shielding layer to be formed can reliably exhibit the original color of the pigment, and the situation in which the glass substrate cannot be subjected to the bending work in the bending step after the provisional sintering step can be avoided.

In the configuration described above, it is preferred that the crystallizable glass comprise as a composition, in terms of mass%, 55% to 75% of SiO₂, 20.5% to 27% of Al₂O₃, 2% or more of Li₂O, 1.5% to 3% of TiO₂, 3.8% to 5% of TiO₂+ZrO₂, 0.1% to 0.5% of SnO₂, and 0% to 1% of V₂O₅.

According to this configuration, the above-mentioned effect can be exhibited more reliably.

In the configuration described above, it is preferred that the pigment comprise a Co-based black pigment.

According to this configuration, the above-mentioned effect can be exhibited more reliably.

In the configuration described above, it is preferred that the glass powder be formed of a B₂O₃-SiO₂-based glass.

According to this configuration, the above-mentioned effect can be exhibited more reliably.

### Advantageous Effects of Invention

As described above, according to the present invention, the method of manufacturing a bent sheet of a crystallized glass in which a formed light-shielding layer exhibits an original color of a pigment can be provided.

### Brief Description of Drawings

FIG. 1 is a schematic sectional view for illustrating a glass bent sheet to be manufactured by a method of manufacturing a glass bent sheet according to an embodiment of the present invention .
FIG. 2 is a flowchart for illustrating the method of manufacturing a glass bent sheet.
FIG. 3 is a view for illustrating a bending step.
FIG. 4 is a flowchart for illustrating a modified example of the method of manufacturing a glass bent sheet.
FIG. 5 is a schematic sectional view for illustrating a glass bent sheet to be manufactured by the method of manufacturing a glass bent sheet according to the modified example.

### Description of Embodiments

A description is made below of an embodiment of the present invention with reference to the drawings.

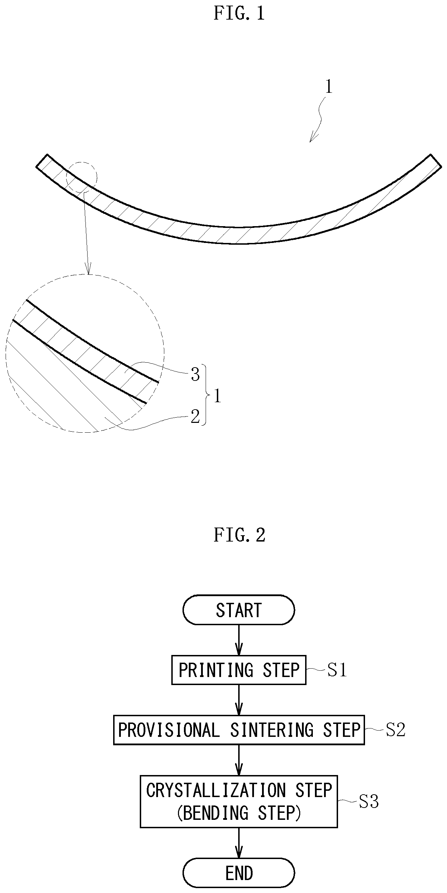

FIG. 1 is a schematic sectional view for illustrating a glass bent sheet 1 to be manufactured by a manufacturing method according to an embodiment of the present invention. The glass bent sheet 1 is a sheet to be used as a window glass for a combustion device. The glass bent sheet 1 has a shape in which the entire glass bent sheet 1 is curved in a cross-section along one of vertical and horizontal directions thereof. The glass bent sheet 1 comprises a glass substrate 2 having a bent sheet shape and a light-shielding layer 3 formed on at least a part of front and back surfaces of the glass substrate 2.

The thickness of the glass substrate 2 is, for example, from 3 mm to 8 mm, preferably from 4 mm to 5 mm. When the thickness of the glass substrate 2 is less than 3 mm, there is a risk in that the strength may become insufficient. When the thickness of the glass substrate 2 is more than 8 mm, there is a risk in that a manufacturing cost may increase.

The glass substrate 2 is formed of a Li₂O-Al₂O₃-SiO₂-based (hereinafter referred to as "LAS-based") crystallized glass containing an alkali metal oxide. More specifically, the glass substrate 2 comprises as a composition, in terms of mass%, 55% to 75% of SiO₂, 20.5% to 27% of Al₂O₃, 2% to 19.1% of Li₂O, 1.5% to 3% of TiO₂, 3.8% to 5% of TiO₂+ZrO₂, 0.1% to 0.5% of SnO₂, and 0% to 1% of V₂O₅ and comprises a β-quartz solid solution as a main crystal for crystallization. With such composition, the glass substrate 2 is not deformed easily and hence can be used in a window for a combustion device.

It is preferred that the thermal expansion coefficient at from 30°C to 380°C of the glass substrate 2 (after crystallization) be from -1×10⁻⁷/°C to 12×10⁻⁷/°C, and it is more preferred that the thermal expansion coefficient at from 30°C to 750°C of the glass substrate 2 (after crystallization) be from -1×10⁻⁷/°C to 15×10⁻⁷/°C. With such thermal expansion coefficient, the glass substrate 2 is not deformed easily and hence can be used in a window for a combustion device.

The light-shielding layer 3 comprises inorganic pigment powder as a pigment and glass powder. The content of each powder in the light-shielding layer 3 is as described below. The content of the inorganic pigment powder in the light-shielding layer 3 is, for example, from 30 wt% to 50 wt%, preferably from 40 wt% to 50 wt%, and the content of the glass powder in the light-shieling layer 3 is, for example, from 50 wt% to 70 wt%, preferably from 50 wt% to 60 wt%. When the content of the inorganic pigment powder is less than 30 wt%, there is a risk in that cracks may occur in the light-shielding layer 3 when heat treatment is performed for forming the light-shielding layer 3, or when heating and cooling are repeated in use as a window glass for a combustion device. Further, a light-shielding property is not obtained easily. Meanwhile, when the content of the inorganic pigment powder is more than 50 wt%, the light-shielding layer 3 becomes porous, and hence there is a risk in that smear may occur when water, an adhesive, or the like adheres to the light-shielding layer 3.

The thickness of the light-shielding layer 3 is, for example, from 1 µm to 10 um, preferably from 2 µm to 5 µm. When the thickness of the light-shielding layer 3 is less than 1 µm, there is a risk in that a light-shielding property may become insufficient. Meanwhile, when the thickness of the light-shielding layer 3 is more than 10 µm, there is a risk in that cracks may occur in a manufacturing step or at a time of use of a combustion device. Further, the occurrence of the cracks may cause smear.

As the inorganic pigment powder, aCo-basedblackpigment, a Cr-Cu-Mn-Mo-based black pigment, a Ti-based white pigment, and the like can be used.

The Cr-Cu-Mn-Mo-based inorganic pigment powder comprises as a composition, in terms of mass%, 48% to 72% of a Cr compound, 25% to 45% of a Cu compound, 3% to 5% of a Mn compound, and 0% to 3% of a Mo compound.

As the glass powder, B₂O₃-SiO₂-based glass, Na₂O-CaO-SiO₂-basedglass, Li₂O-Al₂O₃-SiO₂-basedglass, and the like can be used.

The B₂O₃-SiO₂-based glass powder comprises as a composition, in terms of mass%, 59% to 66.3% of SiO₂, 18% to 20% of B₂O₃, 5.5% to 7.5% of Al₂O₃, 5.5% to 6.5% of Na₂O, 2.5% to 3.5% of BaO, 1.5% to 2.5% of K₂O, and 0.7% to 1.0% of L₂O.

Next, the method of manufacturing the glass bent sheet 1 according to the embodiment of the present invention is described with reference to a flowchart of FIG. 2.

The method of manufacturing the glass bent sheet 1 comprises a printing step S1, a provisional sintering step S2, and a crystallization step S3. In this case, a bending step is performed in the crystallization step S3.

In the printing step S1, a paste including glass powder that contains an alkali metal oxide as a component and a pigment is printed onto the flat sheet-shaped glass substrate 2 formed of a LAS-based glass before crystallization (hereinafter referred to as "crystallizable glass").

More specifically, first, the flat sheet-shaped glass substrate 2 formed of a LAS-based crystallizable glass is prepared. Further, inorganic pigment powder as a pigment and glass powder are mixed, and an organic solvent or the like is added to the mixture to provide a paste. The obtained paste is printed onto the surface of the flat sheet-shaped glass substrate 2. There is no particular limitation on a printing method, and for example, screen printing or transfer printing can be used. The screen printing is preferred because the light-shielding layer 3 having uniform thickness can be formed easily and efficiently.

In the provisional sintering step S2, which is performed after the printing step S1 and before the crystallization step S3, the paste is provisionally sintered by heating the flat sheet-shaped glass substrate 2 having the paste printed thereon at a temperature equal to or higher than a softening point of the glass powder plus 20°C and lower than the highest heating temperature in the crystallization step S3. Through heating in the provisional sintering step S2, the paste is sintered to form the light-shielding layer 3.

Specifically, the provisional sintering step S2 is performed through heating at from 700°C to 760°C in a heating furnace. When the heating temperature in the provisional sintering step S2 is lower than 700°C, the reaction of the alkali metal oxide of the glass powder or the crystallizable glass occurs before the glass powder is dissolved to generate β-spodumene on the surface of the glass in the provisional sintering step S2, and the pigment does not flow easily on the surface of the glass due to the β-spodumene. When the heating temperature in the provisional sintering step S2 is higher than 760°C, the crystallization of the glass starts, and it becomes difficult to perform bending work in the later bending step.

In the provisional sintering step S2, it is not necessarily required to heat the entire glass substrate 2 having the paste printed thereon in the heating furnace or the like, and the periphery of a portion having the paste printed thereon may be locally heated.

The crystallization step S3 is performed in the heating furnace. In addition, the bending step is performed in a part of the crystallization step S3. That is, in the crystallization step S3, the bending work is performed by heating the flat sheet-shaped glass substrate 2 having the paste printed thereon, and simultaneously, the crystallizable glass is crystallized by heating.

More specifically, a region having a relatively low heating temperature (low-temperature region) and a region having a relatively high heating temperature (high-temperature region) are arranged in the heating furnace. The heating furnace is configured so that the glass substrate 2 to be heated moves from the low-temperature region to the high-temperature region. In the low-temperature region, the glass substrate 2 is subjected to the bending work, and a crystal nucleus of a β-quartz solid solution is formed in the glass substrate 2. Then, the growth of the crystal of the β-quartz solid solution is accelerated in the high-temperature region, with the result that the glass substrate 2 is crystallized.

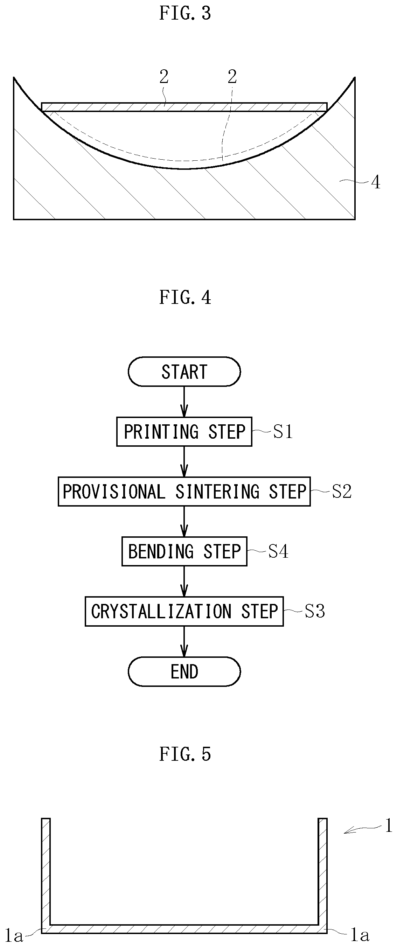

For the bending step, as represented by the solid line in FIG. 3, the flat sheet-shaped glass substrate 2 having the paste printed thereon is placed in the heating furnace in a state of being mounted on a refractory 4 serving as a mold. Then, as represented by the dotted line in FIG. 3, the glass substrate 2 is curved into a shape following the mold in the low-temperature region in the heating furnace. Thus, the glass substrate 2 is subjected to the bending work.

The highest heating temperature in the heating furnace is, for example, from 850°C to 950°C, preferably from 870°C to 930°C. When the heating temperature in the heating furnace is lower than 850°C, there is a risk in that the crystallization of the crystallizable glass may not be performed sufficiently. When the heating temperature in the heating furnace is higher than 950°C, there is a risk in that a manufacturing cost may increase.

In the foregoing description, the bending step is performed in a part of the crystallization step S3. However, the present invention is not limited thereto, and a bending step S4 may be performed separately from the crystallization step S3 as illustrated in FIG. 4.

Such manufacturing method is adopted, for example, when the glass bent sheet 1 to be manufactured has a bent portion 1a as illustrated in FIG. 5. In this case, in the bending step S4, the bending work is performed by local heating. That is, in the bending step S4, the periphery of a portion to become the bent portion 1a in the flat sheet-shaped glass substrate 2 having the paste printed thereon is bent by local heating to form the bent portion 1a. Then, in the crystallizations step S3, the glass substrate 2 having the bent portion 1a formed therein is heated in the heating furnace to be crystallized. The other points are the same as those illustrated in FIG. 2, and hence the description thereof is omitted.

In the method of manufacturing the glass bent sheet 1 according to the embodiment of the present invention configured as described above, the following effects can be exhibited.

The method comprises the provisional sintering step S2 of heating the paste after the printing step S1 and before the bending step S4 and the crystallization step S3. In addition, in the provisional sintering step S2, the paste is heated at a temperature equal to or higher than the softening point of the glass powder plus 20°C. Thus, in the provisional sintering step S2, the glass powder is dissolved immediately. With this, in the provisional sintering step S2, the reaction of the alkali metal oxide of the glass powder or the crystallizable glass is suppressed, and the generation of a crystal of β-spodumene is suppressed. Therefore, in the provisional sintering step S2, the glass powder flows easily, and the pigment is dissolved easily in the glass powder. As a result, the color of the light-shielding layer 3 to be formed can exhibit an original color of the pigment. That is, in the method of manufacturing the glass bent sheet 1 according to this embodiment, the bent sheet 1 of the crystallized glass, in which the formed light-shielding layer 3 exhibits the original color of the pigment, can be manufactured.

Further, in the provisional sintering step S2, the paste is heated at a temperature lower than the highest heating temperature in the crystallization step S3. With this, the crystallization of the crystallizable glass of the glass substrate 2 is suppressed in the provisional sintering step S2. Thus, the situation in which the glass substrate 2 cannot be subjected to the bending work in the crystallization step S3 and the bending step S4 after the provisional sintering step S2 can be avoided.

### Example 1

The inventors of the present application produced a window glass for a combustion device by changing the heating temperature in provisional sintering (provisional sintering temperature) in the method of manufacturing a glass bent sheet according to the present invention and evaluated the characteristics thereof.

First, a commercially available black inorganic pigment (Co-based) and B₂O₃-SiO₂-based glass powder (content of B₂O₃: 19mass%, content of SiO₂: 63 mass%) having a softening point of 675°C were mixed in a mass ratio of 1:1, and a resin and an organic solvent were added to the mixture to produce a paste.

Next, the paste was screen-printed onto a crystallizable glass substrate having dimensions of 1,000×1,000×4.5 mm. Then, the paste was provisionally sintered at a temperature shown in Tables 1 and 2 for 30 minutes and sintered at 870°C to perform bending work and crystallization, to thereby provide a window glass for a combustion device (Examples 1 to 4, Reference Examples 5 and 6, and Comparative Examples 2 to 4). Further, as Comparative Example 1, a window glass for a combustion device was produced in the same steps except that provisional sintering was not performed.

Each of the obtained window glasses for a combustion device was evaluated for each item of crystal growth, color, and bending workability by the following method. The evaluation results of Examples 1 to 4 and Reference Examples 5 and 6 are shown in Table 1, and the evaluation results of Comparative Examples 1 to 4 are shown in Table 2.

The crystal growth was evaluated by subjecting the obtained printed portion to XRD measurement. The case where a peak of β-spodumene was observed was evaluated as "×", and the case where a peak of β-spodumene was not observed was evaluated as "○".

The color was evaluated by observation with the naked eye. The case where an original color of the used inorganic pigment powder (black) was exhibited was evaluated as "○", and the case where discoloration occurred and a color different from the original color was exhibited was evaluated as "×".

The bending workability was evaluated as described below. The case where a satisfactory product ratio when 30 sheets of each sample were subjected to the bending work was 90% or more was evaluated as "○". The case where the satisfactory product ratio was 70% or more and less than 90% was evaluated as "Δ". The case where the satisfactory product ratio was less than 70% was evaluated as "×". Whether or not a product was satisfactory was determined as described below. That is, a product satisfying the following conditions was evaluated as a satisfactory product: with respect to a predetermined product shape, the dimension shape in the case where a glass was subjected to bending work so as to follow a mold having an arc-like cross-section in sintering at 870°C had an arc length of ±2.0 mm, and the entire height in the case where the glass was placed so that the curved surface was arranged in a vertical direction fell within an error range of ±1.5 mm.

**Table 1**

| | Example 1 | Example 2 | Example 3 | Example 4 | Reference Example 5 | Reference Example 6 |
|---|---|---|---|---|---|---|
| Provisional sintering temperature (°C) | 700 | 720 | 740 | 760 | 780 | 800 |
| Crystal growth | ○ | ○ | ○ | ○ | ○ | ○ |
| Color | ○ | ○ | ○ | ○ | ○ | ○ |
| Bending workability | ○ | ○ | ○ | ○ | Δ | Δ |

**Table 2**

| | Comparative Example 1 | Comparative Example 2 | Comparative Example 3 | Comparative Example 4 |
|---|---|---|---|---|
| Provisional sintering temperature (°C) | - | 640 | 660 | 680 |
| Crystal growth | × | × | × | × |
| Color | × | × | × | × |
| Bending workability | ○ | ○ | ○ | ○ |

In the window glass for a combustion device of each of Examples 1 to 4, a peak of β-spodumene was not observed, a black color was exhibited, and bending workability was satisfactory. In the window glass for a combustion device of each of Examples 5 and 6, a black color was exhibited, but bending workability was not sufficient. It is considered that the crystallization of the glass proceeded, and hence the glass was not bent sufficiently.

Meanwhile, in the window glass for a combustion device of each of Comparative Examples 1 to 4, a black color was not exhibited.

In the foregoing description, the glass bent sheet manufactured by the manufacturing method of the present invention is used as a window glass for a combustion device. However, the present invention is not limited thereto, and for example, the glass bent sheet may be used as a fireproof window, equipment for cooking with heat, or the like.

## Claims

1. A method of manufacturing a glass bent sheet, comprising:
printing a paste including glass powder that contains an alkali metal oxide as a component and a pigment onto a flat sheet-shaped glass substrate formed of a LAS-based crystallizable glass;
performing bending work to the glass substrate having the paste printed thereon by heating; and
crystallizing the crystallizable glass by heating,
the method further comprising, after the printing and before the performing bending work and the crystallizing, provisionally sintering the paste printed onto the glass substrate by heating at a temperature equal to or higher than a softening point of the glass powder plus 20°C and lower than a highest heating temperature in the crystallizing,
wherein the heating temperature in the provisionally sintering is from 700°C to 760°C,
wherein in the provisional sintering the glass powder flows easily.

2. The method of manufacturing a glass bent sheet according to claim 1, wherein the crystallizable glass comprises as a composition, in terms of mass%, 55% to 75% of SiO₂, 20.5% to 27% of Al₂O₃, 2% or more of Li₂O, 1.5% to 3% of TiO₂, 3.8% to 5% of TiO₂+ZrO₂, 0.1% to 0.5% of SnO₂, and 0% to 1% of V₂O₅.

3. The method of manufacturing a glass bent sheet according to any one of claims 1 or 2, wherein the pigment comprises a Co-based black pigment.

4. The method of manufacturing a glass bent sheet according to any one of claims 1 to 3, wherein the glass powder is formed of a B₂O₃-SiO₂-based glass.

## Patentansprüche

1. Verfahren zur Herstellung einer gebogenen Glasplatte, umfassend:
Aufdrucken einer Paste, enthaltend Glaspulver, das ein Alkalimetalloxid als Komponente und ein Pigment enthält, auf ein flaches plattenförmiges Substrat, das aus einem LAS-basierten kristallisierbaren Glas gebildet ist,
Ausführen eines Biegevorgangs am Glassubstrat mit der darauf aufgedruckten Paste durch Erhitzen, und
Kristallisieren des kristallisierbaren Glases durch Erhitzen,
wobei das Verfahren ferner, nach dem Aufdrucken und vor dem Ausführen des Biegevorgangs und dem Kristallisieren, das provisorische Sintern der auf dem Glassubstrat aufgedruckten Paste durch Erhitzen bei einer Temperatur gleich oder höher als ein Erweichungspunkt des Glaspulvers plus 20 °C und niedriger als eine höchste Heiztemperatur beim Kristallisieren,
wobei die Heiztemperatur beim provisorischen Sintern von 700 °C bis 760 °C beträgt,
wobei das Glaspulver beim provisorischen Sintern leicht fließt.

2. Verfahren zur Herstellung einer gebogenen Glasplatte nach Anspruch 1, wobei das kristallisierbare Glas als Zusammensetzung, in Massenprozent, 55 % bis 75 % an SiO₂, 20,5 % bis 27 % and Al₂O₃, 2 % oder mehr an Li₂O, 1,5 % bis 3 % an TiO₂, 3,8 % bis 5 % an TiO₂+ZrO₂, 0,1 % bis 0,5 % an SnO₂ und 0 % bis 1 % an V₂O₅ umfasst.

3. Verfahren zur Herstellung einer gebogenen Glasplatte nach Anspruch 1 oder 2, wobei das Pigment ein Co-basiertes schwarzes Pigment umfasst.

4. Verfahren zur Herstellung einer gebogenen Glasplatte nach einem der Ansprüche 1 bis 3, wobei das Glaspulver aus einem B₂O₃-SiO₂-basiertes Glas gebildet ist.

## Revendications

1. Procédé de fabrication d'une feuille de verre cintrée, ledit procédé consistant :
à imprimer une pâte comprenant de la poudre de verre qui contient un oxyde de métal alcalin présent comme un composant et un pigment sur un substrat en verre en forme de feuille plate, ledit substrat étant constitué d'un verre cristallisable à base de LAS, c'est-à-dire de Li₂O-Al₂O₃-SiO₂ ;
à effectuer le cintrage du substrat en verre sur lequel la pâte est imprimée en chauffant ; et
à cristalliser le verre cristallisable en chauffant ;
le procédé consistant en outre, après l'impression et avant la réalisation du cintrage et de la cristallisation, à fritter temporairement la pâte appliquée sur le substrat en verre, en chauffant à une température égale ou supérieure de 20°C à un point de ramollissement de la poudre de verre, et inférieure à une température de chauffage la plus élevée au cours de la cristallisation,
procédé au cours duquel la température de chauffage pendant le frittage effectué temporairement est comprise entre 700°C et 760°C,
procédé au cours duquel la poudre de verre s'écoule facilement pendant le frittage temporaire.

2. Procédé de fabrication d'une feuille de verre cintrée selon la revendication 1, dans lequel le verre cristallisable contient, comme composition, en termes de % en poids, de 55 % à 75 % de SiO₂, de 20,5 % à 27 % de Al₂O₃, de 2 % ou plus de Li₂O, de 1,5 % à 3 % de TiO₂, de 3,8 % à 5 % de TiO₂ + ZrO₂, de 0,1 % à 0,5 % de SnO₂ et de 0 % à 1 % de V₂O₅.

3. Procédé de fabrication d'une feuille de verre cintrée selon l'une des revendications 1 ou 2, dans lequel le pigment contient un pigment noir à base de Co.

4. Procédé de fabrication d'une feuille de verre cintrée selon l'une quelconque des revendications 1 à 3, dans lequel la poudre de verre est composée d'un verre à base de B₂O₃SiO₂.
